# EUROPEAN PATENT SPECIFICATION

(11) **EP 4 501 280 B1**
(45) Date of publication and mention of the grant of the patent: **15.07.2026**
(21) Application number: 23884400.5
(22) Date of filing: 24.08.2023
(51) Int. Cl.: A61C 17/028, A61C 17/02, A61C 1/00

(54) **THROTTLING METHOD FOR DENTAL IRRIGATOR, THROTTLING SYSTEM, AND METHOD FOR USING SAME**
DROSSELVERFAHREN FÜR EIN ZAHNSPÜLGERÄT, DROSSELSYSTEM UND VERFAHREN ZUM VERWENDEN DAVON
PROCÉDÉ POUR ÉTRANGLER UN IRRIGATEUR DENTAIRE, SYSTÈME D'ÉTRANGLEMENT ET PROCÉDÉ POUR UTILISER CELUI-CI

(30) Priority: 04.11.2022 CN 202211379397
(43) Date of publication of application: 05.02.2025
(73) Proprietor: Bixdo (SH) Healthcare Technology Co., Ltd., Shanghai 201100 (CN); Guangdong Bixdo Health Technology Co., Ltd., Foshan, Guangdong 528311 (CN)
(72) Inventor: FU, Jiaquan, Shanghai 201100 (CN)
(74) Representative: Canzler & Bergmeier Patentanwälte Partnerschaft mbB
(86) International application number: PCT/CN2023/114722
(87) International publication number: WO 2024/093463

(56) References cited:
- CN-A- 115 778 595
- CN-A- 116 999 198
- CN-B- 113 229 973
- CN-U- 210 784 778
- CN-U- 214 180 663
- CN-U- 216 589 035
- CN-U- 216 812 121
- JP-U- H0 515 920
- JP-U- H0 528 322
- US-A- 5 785 208
- US-A1- 2022 175 502

## Description

### FIELD OF THE INVENTION

The present disclosure relates to the technical field of oral cleaning, and in particular, to a throttling method for a dental irrigator, a throttling system, and a method for using the throttling system.

### BACKGROUND OF THE INVENTION

As living standards improve, people are becoming increasingly conscious of oral hygiene. Among various oral cleaning tools available on the market, dental irrigators have emerged as essential household appliances, serving as substitutes for traditional dental floss. The basic working principle involves using a pump to draw water from a water tank. The extracted water is then sprayed through a nozzle at high pressure several hundred to over a thousand times per minute. This powerful pulsating water stream effectively cleans food debris and dental plaque, and massages the gums, thereby enhancing oral health.

Traditional pulse-type dental irrigators rely on both pulse and water pressure as key mechanisms for effective cleaning. To achieve optimal cleaning results, it is crucial to maintain a longer duration of pulsating water flow in the dental irrigator.

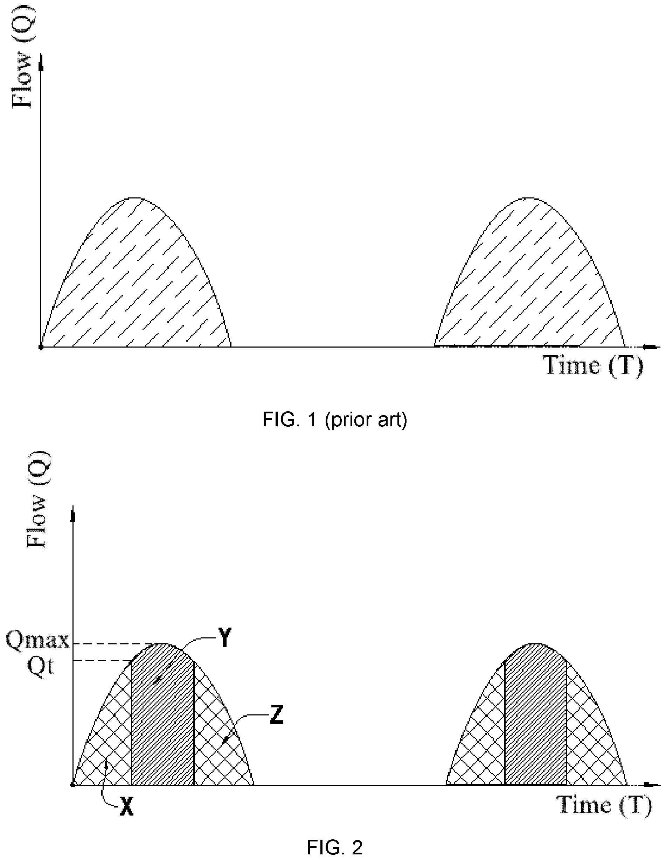

FIG. 1 illustrates flow pulses showing a flow of a plunger pump in the dental irrigator varying over time in a pulsatile manner. The flow curve resembles a series of separated "mound structures." The shaded area corresponding to each "mound structure" represents the total flow ejected during one pulse cycle. However, within each pulse cycle, the instantaneous flow (hereinafter referred to as flow) before and/or after the flow peak is not high, and therefore has a low velocity, leading to less impact on the user's oral cavity and weaker cleaning effectiveness. Consequently, water utilization efficiency is suboptimal.

US5785208 discloses a precompression pump sprayer utilizes a spring-loaded, variable-volume suck-back chamber that expands to suction residual liquid from the discharge orifice, effectively preventing clogging caused by the accumulation of dried product.

### SUMMARY OF THE INVENTION

The invention is as defined in the appended claims.

In view of the above-mentioned shortcomings, the present disclosure provides a throttling method for a dental irrigator, a throttling system, and a method for using the throttling system, which allow for recycling and reusing portions of oral cleaning liquid before and after flow peaks, enhancing cleaning endurance, reducing the duration of each spray, lengthening each interval between two sprays (i.e., the time when no liquid is sprayed out), and making the oral cleaning liquid's impact on the oral cavity more rhythmic.

A first aspect of the present disclosure provides a throttling method for a dental irrigator, which comprises steps S1-S3.

S1 includes obtaining flow pulses showing a flow of the dental irrigator varying over time in a pulsatile manner during operation.

S2 includes defining a flow threshold, and dividing a single pulse cycle of the flow pulses into a high-flow phase and a low-flow phase, where a maximum flow value of the dental irrigator within the single pulse cycle occurs in the high-flow phase.

S3 includes determining whether a present flow value of the dental irrigator is greater than the flow threshold; if yes, determining the dental irrigator to be in an oral irrigating mode, and spraying out liquid in a liquid pump device of the dental irrigator through a nozzle; and if not, determining the dental irrigator to be in a reflux throttling mode, where the liquid in the liquid pump device before and/or after a flow peak flows back to a liquid storage tank of the dental irrigator.

Preferably, S3 is performed by: denoting, a pump chamber pressure of the liquid pump device when the present flow value equals the flow threshold, as a reflux pressure value; determining whether a present pump pressure value of the liquid pump device is greater than the reflux pressure value, if yes, closing a flow channel valve structure between the liquid pump device and the liquid storage tank, and if not, opening the flow channel valve structure.

Preferably, S3 is performed by: denoting positions of an eccentric wheel of the liquid pump device as P1 and P2 when the present flow value equals the flow threshold, where the eccentric wheel rotates from P1 to P2 in the high-flow phase, and rotates from P2 to P1 in the low-flow phase; determining whether the eccentric wheel is in the high-flow phase, if yes, closing a flow channel valve structure between the liquid pump device and the liquid storage tank, and if not, opening the flow channel valve structure.

A second aspect of the present disclosure provides a throttling system for implementing the throttling method of the first aspect of the present disclosure, which comprises a liquid pump device, a liquid-inlet flow channel, a nozzle, and a reflux system.

The liquid pump device comprises a liquid pump cavity and a piston, and the piston reciprocates within a pump chamber of the liquid pump cavity.

A liquid-inlet end of the liquid-inlet flow channel is communicated with the liquid storage tank, and a liquid-outlet end of the liquid-inlet flow channel is communicated with the pump chamber through a liquid-inlet one-way valve.

The nozzle is communicated with the pump chamber through a liquid-outlet one-way valve.

The reflux system comprises a reflux flow channel and a reflux valve assembly. A liquid-inlet end of the reflux flow channel is communicated with the pump chamber through the reflux valve assembly, and a liquid-outlet end of the reflux flow channel is communicated with the liquid storage tank.

Preferably, the reflux valve assembly comprises a pre-peak reflux valve and/or a post-peak reflux valve, both of which recycle liquid when the piston performs an exhaust stroke. The pre-peak reflux valve recycles liquid that occurs before the high-flow phase and the post-peak reflux valve recycles liquid that occurs after the high-flow phase.

Preferably, the pre-peak reflux valve comprises a first pre-peak valve seat, a second pre-peak valve seat, and a pre-peak valve core. The first pre-peak valve seat is formed in the liquid pump cavity, the second pre-peak valve seat is formed in the reflux flow channel, and the pre-peak valve core adjusts with hydraulic variations in the pump chamber, floating to establish a liquid-tight connection with the first pre-peak valve seat and/or the second pre-peak valve seat.

Preferably, the post-peak reflux valve comprises a post-peak valve seat, a slider, a post-peak valve core, and an elastic reset member. The post-peak valve seat is formed in the liquid pump cavity, the slider slidably extends through the post-peak valve seat, the post-peak valve core is disposed in the reflux flow channel and on the slider, and the elastic reset member is disposed between an inner wall of the reflux flow channel and the post-peak valve core. The post-peak valve seat and the post-peak valve core are pressed against each other to form a liquid-tight connection.

Preferably, the slider extends into the pump chamber along a reciprocating motion direction of the piston, and the slider is configured to be ejected out of the pump chamber by the piston to open the post-peak reflux valve only when the piston performs the exhaust stroke and the present flow value of the dental irrigator is not greater than the flow threshold.

Preferably, the throttling system further comprises an inlet/outlet adapter disposed outside the liquid pump cavity, and the liquid-inlet one-way valve, the liquid-outlet one-way valve, and the reflux valve assembly are disposed on the inlet/outlet adapter.

Preferably, the throttling system further comprises a liquid pump housing for mounting the inlet/outlet adapter, and part of the reflux flow channel is formed between the liquid pump housing and the inlet/outlet adapter.

A third aspect of the present disclosure provides a method for using the throttling system of the second aspect of the present disclosure, comprising: when the present flow value of the dental irrigator is not greater than the flow threshold and before the flow peak occurs, opening the pre-peak reflux valve and closing the post-peak reflux valve, after which the liquid flows back to the liquid storage tank through first the pre-peak reflux valve and then the reflux flow channel; when the present flow value of the dental irrigator is greater than the flow threshold, closing the pre-peak reflux valve and the post-peak reflux valve; when the present flow value of the dental irrigator is not greater than the flow threshold and after the flow peak occurs, closing the pre-peak reflux valve and opening the post-peak reflux valve, after which the liquid flows back to the liquid storage tank through first the post-peak reflux valve and then the reflux flow channel.

As described above, the throttling method for the dental irrigator, the throttling system, and the method for using the throttling system of the present disclosure have the following beneficial effects.

Firstly, the flow data of the dental irrigator during operation can be collected by experimental testing methods, obtaining flow pulses showing the flow of the dental irrigator varying over time in a pulsatile manner during operation. In FIG. 2, the horizontal axis represents time T, and the vertical axis represents flow Q. Secondly, the flow threshold is defined based on the required flushing force of the jet stream during oral cavity irrigation. In FIG. 2, each region defined by the flow curve and the time axis within a single pulse cycle is divided, by the flow threshold, into one high-flow spraying region (Region Y) and two low-flow reflux regions (Region X and Region Z), with peak data points located within the high-flow spraying region. Here, Qmax represents the flow peak, and Qthreshold represents the flow threshold. Region X corresponds to the low-flow reflux region before the flow peak, while Region Z corresponds to the low-flow reflux region after the flow peak. Regions X and Z have a lower flow velocity, and their respective total flow can be refluxed. In contrast, Region Y has a higher flow velocity, and its corresponding total flow is used for oral cleaning. Lastly, when users use a dental irrigator, the dental irrigator performs the following throttling method: determining whether the present flow value of the dental irrigator is greater than the flow threshold; if yes, determining the dental irrigator to be in the oral irrigating mode, and spraying out the liquid in the liquid pump device of the dental irrigator through the nozzle; and if not, determining the dental irrigator to be in the reflux throttling mode, where the liquid in the liquid pump device before and/or after the flow peak flows back to the liquid storage tank of the dental irrigator. In other words, in some cases either the oral cleaning liquid before or after flow peaks is refluxed, and in some other cases both are refluxed, avoiding any waste of the oral cleaning liquid. Therefore, compared to the traditional cleaning methods of dental irrigators, the throttling method of the present disclosure allows for recycling and reusing portions of the oral cleaning liquid before and after flow peaks, enhancing cleaning endurance, reducing the duration of each spray, lengthening each interval between two sprays, and making the oral cleaning liquid's impact on the oral cavity more rhythmic.

### BRIEF DESCRIPTION OF DRAWINGS

FIG. 1 shows a graph of flow pulses of a plunger pump of a dental irrigator in the prior art.
FIG. 2 shows a graph of flow pulses related to a throttling method of the present disclosure.
FIG. 3 shows a front view of a throttling system of the present disclosure.
FIG. 4 shows a cross-sectional view along A-A in FIG. 3.
FIG. 5 shows an enlarged view of portion C in FIG. 4.
FIG. 6 shows a cross-sectional view along B-B in FIG. 4.
FIG. 7 shows an enlarged view of portion D in FIG. 6.

### Reference Numerals

- 1: Liquid pump device
- 11: Liquid pump cavity
- 111: Pump chamber
- 12: Piston
- 13: Transmission mechanism
- 14: Driving mechanism
- 15: Inlet/outlet adapter
- 16: Liquid pump housing
- 2: Liquid-inlet flow channel
- 3: Liquid-inlet one-way valve
- 4: Nozzle
- 5: Liquid-outlet one-way valve
- 6: Reflux system
- 61: Reflux flow channel
- 62: Pre-peak reflux valve
- 621: First pre-peak valve seat
- 622: Second pre-peak valve seat
- 623: Pre-peak valve core
- 63: Post-peak reflux valve
- 631: Post-peak valve seat
- 632: Slider
- 633: Post-peak valve core
- 634: Elastic reset member
- 635: Post-peak flow-through hole
- 635a: Large-diameter hole portion
- 635b: Small-diameter hole portion
- 635c: Post-peak communication slot

### DETAILED DESCRIPTION OF THE INVENTION

The embodiments of the present disclosure will be described below. Those skilled can easily understand disclosure advantages and effects of the present disclosure according to contents disclosed by the specification.

It should be noted that the structure, ratio, size, etc. shown in the accompanying drawings in this specification are only used to illustrate the content disclosed in the specification for the understanding and reading of those familiar with this technology, and are not intended to limit the implementation of the present invention. Any structural modification, proportional relationship change or size adjustment should still fall within the scope of the present disclosure, given that no effect and objective achievable by the present disclosure are hindered. In the meantime, the terms "upper", "lower", "left", "right", "intermediate" and "one" as used in this specification are also for convenience of description, and are not intended to limit the scope of the present disclosure, and the change or adjustment of the relative relationship is considered to be within the scope of the present disclosure without substantial changes in technology.

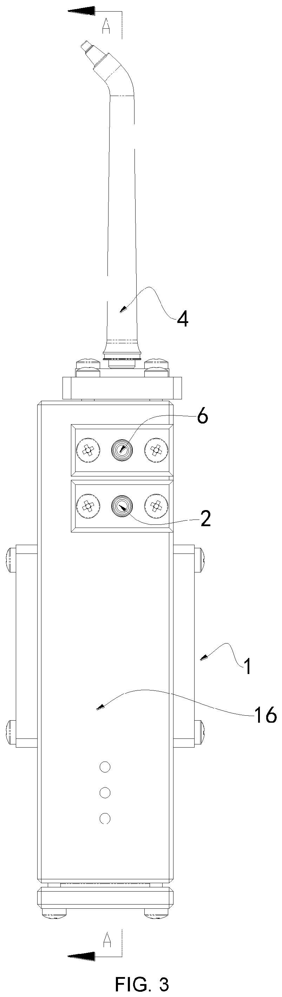

As shown in FIGs. 2 and 3, the present disclosure provides a throttling method for a dental irrigator. The throttling method comprises steps S1-S3.

S1 includes obtaining flow pulses showing a flow of the dental irrigator varying over time in a pulsatile manner during operation.

S2 includes defining a flow threshold, and dividing a single pulse cycle of the flow pulses into a high-flow phase and a low-flow phase, where a maximum flow value of the dental irrigator within the single pulse cycle occurs in the high-flow phase.

S3 includes determining whether a present flow value of the dental irrigator is greater than the flow threshold; if yes, determining the dental irrigator to be in an oral irrigating mode, and spraying out liquid in a liquid pump device 1 of the dental irrigator through a nozzle 4; and if not, determining the dental irrigator to be in a reflux throttling mode, where the liquid in the liquid pump device 1 before and/or after a flow peak flows back to a liquid storage tank (not shown) of the dental irrigator.

Regarding the present disclosure, firstly, the flow data of the dental irrigator during operation can be collected by experimental testing methods, obtaining the flow pulses showing the flow of the dental irrigator varying over time in a pulsatile manner during operation. Generally, the flow pulses can be represented on a graph, with the horizontal axis representing time T and the vertical axis representing flow Q. Secondly, the flow threshold is defined based on the required flushing force of the jet stream during oral cavity irrigation. In the graph, the region defined by a flow curve and a time axis within a single pulse cycle is divided, by the flow threshold, into one high-flow spraying region (Region Y) and two low-flow reflux regions (Region X and Region Z), with peak data points located within the high-flow spraying region. Referring to FIG. 2, Qmax represents the flow peak, Qthreshold (or, Qt) represents the flow threshold. Besides, X and Z regions are shaded with meshes, while Region Y is shaded with diagonal lines. Additionally, Region X corresponds to the low-flow reflux region (i.e., low-flow phase) before the flow peak, Region Y corresponds to the high-flow spraying region (i.e., high-flow phase), and Region Z corresponds to the low-flow reflux region (i.e., low-flow phase) after the flow peak. Regions X and Z have a lower flow velocity, and their respective total flow can be refluxed. In contrast, Region Y has a higher flow velocity, and its corresponding total flow is used for oral cleaning. Lastly, when users use a dental irrigator, the dental irrigator performs the following throttling method: determining whether the present flow value of the dental irrigator is greater than the flow threshold in real time; if yes, determining the dental irrigator to be in the oral irrigating mode, and spraying out the liquid in the liquid pump device 1 of the dental irrigator through the nozzle 4; and if not, determining the dental irrigator to be in the reflux throttling mode, where the liquid in the liquid pump device 1 before and/or after the flow peak flows back to the liquid storage tank of the dental irrigator. In other words, in some cases either the oral cleaning liquid before or after flow peak times is refluxed, and in some other cases both are refluxed, avoiding any waste of the oral cleaning liquid.

Therefore, compared to the traditional cleaning methods of dental irrigators, the throttling method of the present disclosure allows for recycling and reusing portions of the oral cleaning liquid before and after flow peaks, enhancing cleaning endurance, reducing the duration of each spray, lengthening each interval between two sprays, and making the oral cleaning liquid's impact on the oral cavity more rhythmic.

In a preferred embodiment, S3 is performed by: denoting, a pump chamber pressure of the liquid pump device 1 when the present flow value equals the flow threshold, as a reflux pressure value; determining whether a present pump pressure value of the liquid pump device 1 is greater than the reflux pressure value, if yes, closing a flow channel valve structure between the liquid pump device 1 and the liquid storage tank, and if not, opening the flow channel valve structure. Specifically, the flow channel valve structure may switch between its open and closed states under the control of a control system of the dental irrigator. Additionally, the flow channel valve structure may also switch its state based on its own pressure performance.

In another preferred embodiment, S3 is performed by: denoting positions of an eccentric wheel of the liquid pump device 1 as P1 and P2 when the present flow value equals the flow threshold, where the eccentric wheel rotates from P1 to P2 in the high-flow phase, and rotates from P2 to P1 in the low-flow phase; determining whether the eccentric wheel is in the high-flow phase, if yes, closing the flow channel valve structure between the liquid pump device 1 and the liquid storage tank, and if not, opening the flow channel valve structure. During the high-flow phase, a rotation angle of the eccentric wheel is less than 180 degrees, while during the low-flow phase, the rotation angle exceeds 180 degrees. A total rotation angle across both phases sums up to 360 degrees. Instead of relying on the present pump pressure value to determine whether the present flow value of the dental irrigator is greater than the flow threshold, assessing it based on the positions of the eccentric wheel provides a more precise method.

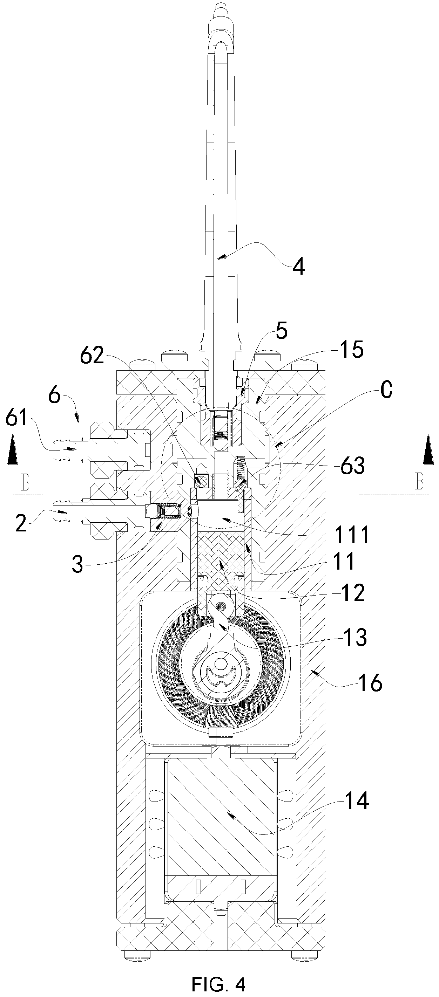

As shown in FIGs. 3, 4 and 5, the present disclosure further provides a throttling system for implementing the above throttling method. The throttling system comprises a liquid pump device 1, a liquid-inlet flow channel 2, a nozzle 4, and a reflux system 6.

The liquid pump device 1 comprises a liquid pump cavity 11 and a piston 12, and the piston 12 reciprocates within a pump chamber 111 of the liquid pump cavity 11.

A liquid-inlet end of the liquid-inlet flow channel 2 is communicated with the liquid storage tank, and a liquid-outlet end of the liquid-inlet flow channel 2 is communicated with the pump chamber 111 through a liquid-inlet one-way valve 3.

The nozzle 4 is communicated with the pump chamber 111 through a liquid-outlet one-way valve 5.

The reflux system 6 comprises a reflux flow channel 61 and a reflux valve assembly. A liquid-inlet end of the reflux flow channel 61 is communicated with the pump chamber 111 through the reflux valve assembly, and a liquid-outlet end of the reflux flow channel 61 is communicated with the liquid storage tank.

In the present throttling system, when the piston 12 is pulled back to perform a suction stroke, the liquid-outlet one-way valve 5 closes, the liquid-inlet one-way valve 3 opens, and the oral cleaning liquid flows to the pump chamber 111 through first the liquid-inlet flow channel 2 and then the liquid-inlet one-way valve 3.

When the piston 12 is pushed out to perform an exhaust stroke, the liquid-outlet one-way valve 5 opens, the liquid-inlet one-way valve 3 closes, and the oral cleaning liquid sprays out through first the liquid-outlet one-way valve 5 and then the nozzle 4.

The reflux system 6 operates in at least three manners.

In a first manner, when the exhaust stroke begins, the reflux valve assembly opens; as the piston 12 is being pushed out, the reflux valve assembly closes before the high-flow phase occurs, and remains closed until the exhaust stroke is finished.

In a second manner, when the exhaust stroke begins, the reflux valve assembly closes; as the piston 12 is being pushed out, the reflux valve assembly opens after the high-flow phase concludes, and remains open until the exhaust stroke is finished.

In a third manner, when the exhaust stroke begins, the reflux valve assembly opens; as the piston 12 is being pushed out, the reflux valve assembly closes before the high-flow phase occurs; then as the piston 12 continues its motion, the reflux valve assembly opens again after the high-flow phase concludes, and remains open until the exhaust stroke is finished.

The liquid pump device 1 further comprises a transmission mechanism 13 and a driving mechanism 14, and the piston 12 is in transmission connection with the driving mechanism 14 through the transmission mechanism 13. The driving mechanism 14 drives the piston 12 to perform a reciprocating motion.

The liquid pump device 1 may be a plunger pump; the transmission mechanism 13 and the driving mechanism 14 may both be existing mechanisms; the transmission mechanism 13 may be an eccentric wheel assembly, and the driving mechanism 14 may be a motor assembly.

The liquid-inlet one-way valve 3 and the liquid-outlet one-way valve 5 may be ball valves (with reset springs) and valve plates.

The reflux valve assembly may comprise one or two valves. As an example, the reflux valve assembly comprises a pre-peak reflux valve 62 and/or a post-peak reflux valve 63, both of which recycle liquid when the piston 12 performs the exhaust stroke. The pre-peak reflux valve 62 recycles liquid that occurs before the high-flow phase and the post-peak reflux valve 63 recycles liquid that occurs after the high-flow phase. It should be noted that term "liquid that occurs before/after the high-flow phase" refers to liquid in the pump chamber 111 with a flow no higher than Qthreshold. When the exhaust stroke begins, the pre-peak reflux valve 62 opens; as the piston 12 is being pushed out, the pre-peak reflux valve 62 closes before the high-flow phase occurs; then as the piston 12 continues its motion, the post-peak reflux valve 63 opens after the high-flow phase concludes, and remains open until the exhaust stroke is finished.

To enable automatic state switching for the pre-peak reflux valve 62, the pre-peak reflux valve 62 comprises a first pre-peak valve seat 621, a second pre-peak valve seat 622, and a pre-peak valve core 623. The first pre-peak valve seat 621 is formed in the liquid pump cavity 11, the second pre-peak valve seat 622 is formed in the reflux flow channel 61, and the pre-peak valve core 623 adjusts with hydraulic variations in the pump chamber 111, floating to establish a liquid-tight connection with the first pre-peak valve seat 621 and/or the second pre-peak valve seat 622. Specifically, the first pre-peak valve seat 621 has a first pre-peak flow-through hole, and is formed from part of the liquid pump cavity 11. The second pre-peak valve seat 622 has a second pre-peak flow-through hole, and is formed from an end portion of the reflux flow channel 61. The pre-peak valve core 623 is configured to block the first pre-peak flow-through hole and/or the second pre-peak flow-through hole.

When the liquid pump cavity 11 sucks liquid, the pre-peak valve core 623 rests on the first pre-peak valve seat 621, enhancing the suction capability of the liquid pump cavity 11. When the liquid pump cavity 11 exhausts liquid, initially, the pre-peak valve core 623 is neither on the second pre-peak valve seat 622 nor on the first pre-peak valve seat 621 (that is, the pre-peak reflux valve 62 is in an open state); as an internal pressure of the pump chamber 111 increases, the liquid flows back to the reflux flow channel 61 through the pre-peak valve core 623, driving the pre-peak valve core 623 toward the second pre-peak valve seat 622 until it completely blocks the second pre-peak flow-through hole. By adjusting a spacing between the first pre-peak valve seat 621 and the second pre-peak valve seat 622, a size or weight of the pre-peak valve core 623, and a gap between the pre-peak valve core 623 and an inner wall of the pre-peak reflux valve 62, the pre-peak valve core 623 can be controlled to completely block the second pre-peak flow-through hole before the flow peak occurs, in a precise manner.

If the gap between the pre-peak valve core 623 and the inner wall of the pre-peak reflux valve 62 is small, a volume resulting from a motion of the pre-peak valve core 623 (which is the product of its cross-sectional area and its motion distance) approximately matches a volume decrease of the liquid before the flow peak occurs.

Specifically, the first pre-peak flow-through hole is disposed at a top portion of the liquid pump cavity 11, and a chamber of the pre-peak reflux valve 62 is at a junction of the liquid pump cavity 11 and the reflux flow channel 61. The pre-peak valve core 623 may be spherical.

To enable automatic state switching for the post-peak reflux valve 63, the post-peak reflux valve 63 comprises a post-peak valve seat 631, a slider 632, a post-peak valve core 633, and an elastic reset member (such as compression springs) 634. The post-peak valve seat 631 is formed in the liquid pump cavity 11, the slider 632 slidably extends through the post-peak valve seat 631, the post-peak valve core 633 is disposed in the reflux flow channel 61 and on the slider 632, and the elastic reset member 634 is disposed between an inner wall of the reflux flow channel 61 and the post-peak valve core 633. The post-peak valve seat 631 and the post-peak valve core 633 are pressed against each other to form a liquid-tight connection. The post-peak valve seat 631 has a post-peak flow-through hole 635.

When the post-peak valve core 633 is pressed against the post-peak valve seat 631 under the elastic force of the elastic reset member 634, the post-peak reflux valve 63 switches to a closed state. After the flow peak, when the post-peak valve core 633 overcomes the elastic force of the elastic reset member 634, the post-peak valve core 633 can move away from the post-peak valve seat 631, and the post-peak reflux valve 63 switches to an open state.

To simplify the above switching manner for the post-peak reflux valve 63, the slider 632 extends into the pump chamber 111 along a reciprocating motion direction of the piston 12, and the slider 632 is configured to be pushed out of the pump chamber 111 by the piston 12 to open the post-peak reflux valve 63 only when the piston 12 performs the exhaust stroke and the present flow value of the dental irrigator is not greater than the flow threshold.

Specifically, the normal internal pressure of the pump chamber 111 is insufficient to move the post-peak valve core 633 away from the post-peak valve seat 631. When the nozzle 4 is blocked, the internal pressure of the pump chamber 111 increases until it reaches a preset pressure, at which time the internal pressure of the pump chamber 111 is released through relief valves (may be existing relief valves) of the dental irrigator.

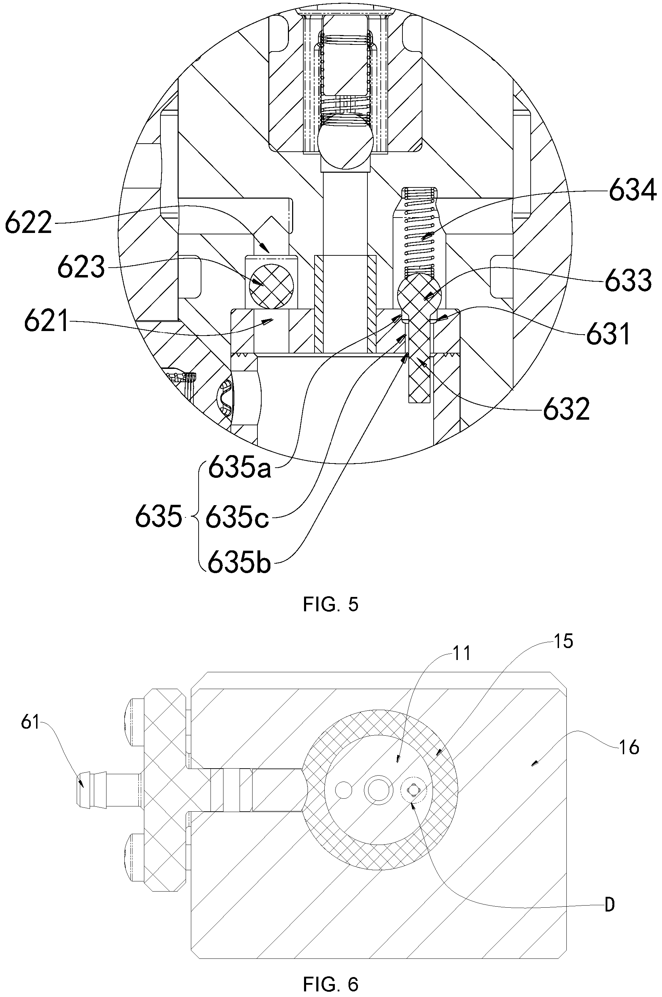

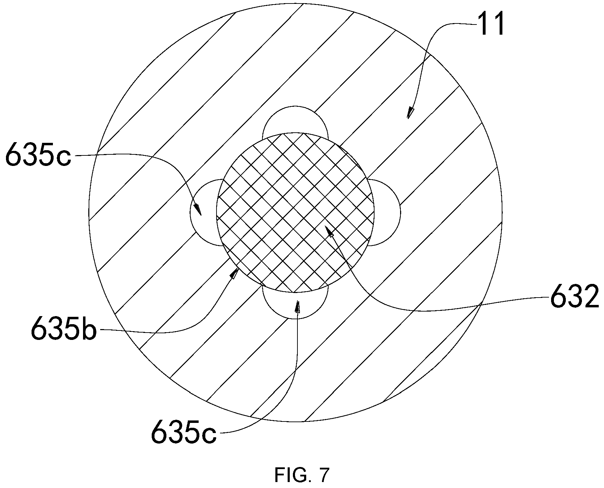

When the liquid pump cavity 11 exhausts the liquid, after the flow peak, the piston 12 reaches a preset position. Subsequently, the slider 632 is configured to be pushed out of the liquid pump cavity 11 by the piston 12. Since the post-peak valve core 633 moves synchronously with the slider 632, the post-peak valve core 633 moves away from the post-peak valve seat 631, thereby achieving forced pressure release, during which time portions of the liquid flow back to the liquid storage tank through the reflux flow channel 61, reducing the liquid that occurs after the flow peak. Additionally, the slider 632 serves as a motion guide, ensuring precise movement of the post-peak valve core 633 after the flow peak and enhancing liquid-tightness and stability. In some specific embodiments, the slider 632 is cylindrical. The slider 632 slidably extends through the post-peak flow-through hole 635. Furthermore, as shown in FIGs. 5, 6 and 7, the post-peak flow-through hole 635 has a two-stage stepped structure. The post-peak flow-through hole 635 comprises a large-diameter hole portion 635a and a small-diameter hole portion 635b communicated with each other. A hole wall of the small-diameter hole portion 635b is provided with a post-peak communication slot 635c, and the large-diameter hole portion 635a is blocked by the post-peak valve core 633. The small-diameter hole portion 635b is slidably arranged on and around the slider 632, and the large-diameter hole portion 635a is communicated with the pump chamber 111 through the post-peak communication slot 635c.

To enhance the structural integration of the throttling system, the throttling system further comprises an inlet/outlet adapter 15 disposed outside the liquid pump cavity 11. The liquid-inlet one-way valve 3, the liquid-outlet one-way valve 5, and the reflux valve assembly are disposed on the inlet/outlet adapter 15.

To facilitate the connection between the reflux flow channel 61 and the liquid pump cavity 11, the throttling system further comprises a liquid pump housing 16 for mounting the inlet/outlet adapter 15, and part of the reflux flow channel 61 is formed between the liquid pump housing 16 and the inlet/outlet adapter 15.

The present disclosure also provides a method for using the above throttling system, comprising:
when the present flow value of the dental irrigator is not greater than the flow threshold and before the flow peak occurs, opening the pre-peak reflux valve 62 and closing the post-peak reflux valve 63, after which the liquid flows back to the liquid storage tank through first the pre-peak reflux valve 62 and then the reflux flow channel 61; exemplarily, the flow of the dental irrigator is an inlet flow of the dental irrigator, and is sensed by flow sensors disposed at an inlet of the dental irrigator; or the flow of the dental irrigator is an internal flow of the dental irrigator, and is sensed by flow sensors disposed in the pump chamber 11 of the dental irrigator.
when the present flow value of the dental irrigator is greater than the flow threshold, closing the pre-peak reflux valve 62 the post-peak reflux valve 63;
when the present flow value of the dental irrigator is not greater than the flow threshold and after the flow peak occurs, closing the pre-peak reflux valve 62 and opening the post-peak reflux valve 63, after which the liquid flows back to the liquid storage tank through first the post-peak reflux valve 63 and then the reflux flow channel 61.

The throttling method of the present disclosure allows for recycling and reusing portions of the oral cleaning liquid before and after flow peaks, enhancing cleaning endurance, reducing the duration of each spray, lengthening each interval between two sprays, and making the oral cleaning liquid's impact on the oral cavity more rhythmic.

In summary, the throttling method of the present disclosure allows for recycling and reusing portions of the oral cleaning liquid before and after flow peaks, enhancing cleaning endurance, reducing the duration of each spray, lengthening each interval between two sprays, and making the oral cleaning liquid's impact on the oral cavity more rhythmic. Therefore, the present disclosure effectively overcomes various shortcomings in the existing technology and has high industrial utilization value.

The above-mentioned embodiments are for exemplarily describing the principle and effects of the present disclosure instead of limiting the present disclosure. Those skilled in the art can make modifications or changes to the above-mentioned embodiments without going against the extent of the present disclosure. Therefore, modifications or changes may be made by those who have common knowledge in the art without departing from the scope of the present invention as defined by the appended claims.

## Claims

1. A throttling method for a dental irrigator, comprising:
S1: obtaining flow pulses showing a flow of the dental irrigator varying over time in a pulsatile manner during operation;
S2: defining a flow threshold, and dividing a single pulse cycle of the flow pulses into a high-flow phase and a low-flow phase; wherein a maximum flow value of the dental irrigator within the single pulse cycle occurs in the high-flow phase;
S3: determining whether a present flow value of the dental irrigator is greater than the flow threshold; if yes, determining the dental irrigator to be in an oral irrigating mode, and spraying out liquid in a liquid pump device (1) of the dental irrigator through a nozzle (4); and if not, determining the dental irrigator to be in a reflux throttling mode, where the liquid in the liquid pump device (1) before and/or after a flow peak flows back to a liquid storage tank of the dental irrigator.

2. The throttling method according to claim 1, wherein S3 is performed by:
denoting, a pump chamber pressure of the liquid pump device (1) when the present flow value equals the flow threshold, as a reflux pressure value;
determining whether a present pump pressure value of the liquid pump device (1) is greater than the reflux pressure value, if yes, closing a flow channel valve structure between the liquid pump device (1) and the liquid storage tank, and if not, opening the flow channel valve structure.

3. The throttling method according to claim 1, wherein S3 is performed by:
denoting positions of an eccentric wheel of the liquid pump device (1) as P1 and P2 when the present flow value equals the flow threshold, wherein the eccentric wheel rotates from P1 to P2 in the high-flow phase, and rotates from P2 to P1 in the low-flow phase;
determining whether the eccentric wheel is in the high-flow phase, if yes, closing a flow channel valve structure between the liquid pump device (1) and the liquid storage tank, and if not, opening the flow channel valve structure.

4. A throttling system for implementing a throttling method according to any one of claims 1-3, comprising:
a liquid pump device (1) comprising a liquid pump cavity (11) and a piston (12), wherein the piston (12) reciprocates within a pump chamber (111) of the liquid pump cavity (11);
a liquid-inlet flow channel (2), wherein a liquid-inlet end of the liquid-inlet flow channel (2) is communicated with the liquid storage tank, and a liquid-outlet end of the liquid-inlet flow channel (2) is communicated with the pump chamber (111) through a liquid-inlet one-way valve (3);
a nozzle (4) communicated with the pump chamber (111) through a liquid-outlet one-way valve (5); and
a reflux system (6) comprising a reflux flow channel (61) and a reflux valve assembly, wherein a liquid-inlet end of the reflux flow channel (61) is communicated with the pump chamber (111) through the reflux valve assembly, and a liquid-outlet end of the reflux flow channel (61) is communicated with the liquid storage tank.

5. The throttling system according to claim 4, wherein the reflux valve assembly comprises a pre-peak reflux valve (62) and/or a post-peak reflux valve (63), both of which recycle liquid when the piston (12) performs an exhaust stroke, wherein the pre-peak reflux valve (62) recycles liquid that occurs before the high-flow phase and the post-peak reflux valve (63) recycles liquid that occurs after the high-flow phase.

6. The throttling system according to claim 5, wherein the pre-peak reflux valve (62) comprises a first pre-peak valve seat (621), a second pre-peak valve seat (622), and a pre-peak valve core (623), wherein the first pre-peak valve seat (621) is formed in the liquid pump cavity (11), the second pre-peak valve seat (622) is formed in the reflux flow channel (61), and the pre-peak valve core (623) adjusts with hydraulic variations in the pump chamber (111), floating to establish a liquid-tight connection with the first pre-peak valve seat (621) and/or the second pre-peak valve seat (622).

7. The throttling system according to claim 5, wherein the post-peak reflux valve (63) comprises a post-peak valve seat (631), a slider (632), a post-peak valve core (633), and an elastic reset member (634), wherein the post-peak valve seat (631) is formed in the liquid pump cavity (11), the slider (632) slidably extends through the post-peak valve seat (631), the post-peak valve core (633) is disposed in the reflux flow channel (61) and on the slider (632), and the elastic reset member (634) is disposed between an inner wall of the reflux flow channel (61) and the post-peak valve core (633), wherein the post-peak valve seat (631) and the post-peak valve core (633) are pressed against each other to form a liquid-tight connection.

8. The throttling system according to claim 7, wherein the slider (632) extends into the pump chamber (111) along a reciprocating motion direction of the piston (12), and the slider (632) is configured to be ejected out of the pump chamber (111) by the piston (12) to open the post-peak reflux valve (63) only when the piston (12) performs the exhaust stroke and the present flow value of the dental irrigator is not greater than the flow threshold.

9. The throttling system according to claim 4, wherein the throttling system further comprises an inlet/outlet adapter (15) disposed outside the liquid pump cavity (11), wherein the liquid-inlet one-way valve (3), the liquid-outlet one-way valve (5), and the reflux valve assembly are disposed on the inlet/outlet adapter (15).

10. The throttling system according to claim 9, wherein the throttling system further comprises a liquid pump housing (16) for mounting the inlet/outlet adapter (15), and part of the reflux flow channel (61) is formed between the liquid pump housing (16) and the inlet/outlet adapter (15).

11. A method for using a throttling system according to any one of claims 5-10, comprising:
when the present flow value of the dental irrigator is not greater than the flow threshold and before the flow peak occurs, opening the pre-peak reflux valve (62) and closing the post-peak reflux valve (63), after which the liquid flows back to the liquid storage tank through first the pre-peak reflux valve (62) and then the reflux flow channel (61);
when the present flow value of the dental irrigator is greater than the flow threshold, closing the pre-peak reflux valve (62) and the post-peak reflux valve (63);
when the present flow value of the dental irrigator is not greater than the flow threshold and after the flow peak occurs, closing the pre-peak reflux valve (62) and opening the post-peak reflux valve (63), after which the liquid flows back to the liquid storage tank through first the post-peak reflux valve (63) and then the reflux flow channel (61).

## Patentansprüche

1. Drosselverfahren für ein Zahnspülgerät, umfassend:
S1: Erhalten von Strömungsimpulsen, die eine Strömung des Zahnspülgeräts zeigen, die im Laufe der Zeit während des Betriebs auf pulsierende Weise variiert;
S2: Definieren einer Strömungsschwelle und Unterteilen eines einzelnen Pulszyklus der Strömungsimpulse in eine Phase mit hoher Strömung und eine Phase mit niedriger Strömung; wobei ein maximaler Strömungswert des Zahnspülgeräts innerhalb des einzelnen Pulszyklus in der Phase mit hoher Strömung auftritt;
S3: Bestimmen, ob ein gegenwärtiger Strömungswert des Zahnspülgeräts größer als die Strömungsschwelle ist; wenn ja, Bestimmen, dass sich das Zahnspülgerät in einem Mundspülmodus befindet, und Aussprühen von Flüssigkeit in einer Flüssigkeitspumpvorrichtung (1) des Zahnspülgeräts durch eine Düse (4); und wenn nicht, Bestimmen, dass sich das Zahnspülgerät in einem Rückflussdrosselmodus befindet, wobei die Flüssigkeit in der Flüssigkeitspumpvorrichtung (1) vor und/oder nach einer Strömungsspitze zu einem Flüssigkeitsspeichertank des Zahnspülgeräts zurückströmt.

2. Drosselverfahren nach Anspruch 1, wobei S3 durchgeführt wird durch:
Bezeichnen eines Pumpkammerdrucks der Flüssigkeitspumpvorrichtung (1), wenn der gegenwärtige Strömungswert gleich der Strömungsschwelle ist, als einen Rückflussdruckwert;
Bestimmen, ob ein gegenwärtiger Pumpdruckwert der Flüssigkeitspumpvorrichtung (1) größer als der Rückflussdruckwert ist, wenn ja, Schließen einer Strömungskanalventilstruktur zwischen der Flüssigkeitspumpvorrichtung (1) und dem Flüssigkeitsspeichertank, und wenn nicht, Öffnen der Strömungskanalventilstruktur.

3. Drosselverfahren nach Anspruch 1, wobei S3 durchgeführt wird durch:
Bezeichnen von Positionen eines Exzenterrads der Flüssigkeitspumpvorrichtung (1) als P1 und P2, wenn der gegenwärtige Strömungswert gleich der Strömungsschwelle ist, wobei sich das Exzenterrad in der Phase mit hoher Strömung von P1 zu P2 dreht und sich in der Phase mit niedriger Strömung von P2 zu P1 dreht;
Bestimmen, ob sich das Exzenterrad in der Phase mit hoher Strömung befindet, wenn ja, Schließen einer Strömungskanalventilstruktur zwischen der Flüssigkeitspumpvorrichtung (1) und dem Flüssigkeitsspeichertank, und wenn nicht, Öffnen der Strömungskanalventilstruktur.

4. Drosselsystem zum Implementieren eines Drosselverfahrens nach einem der Ansprüche 1-3, umfassend:
eine Flüssigkeitspumpvorrichtung (1), umfassend einen Flüssigkeitspumphohlraum (11) und einen Kolben (12), wobei sich der Kolben (12) innerhalb einer Pumpkammer (111) des Flüssigkeitspumphohlraums (11) hin- und herbewegt;
einen Flüssigkeitseinlassströmungskanal (2), wobei ein Flüssigkeitseinlassende des Flüssigkeitseinlassströmungskanals (2) mit dem Flüssigkeitsspeichertank in Verbindung steht und ein Flüssigkeitsauslassende des Flüssigkeitseinlassströmungskanals (2) durch ein Flüssigkeitseinlass-Einwegventil (3) mit der Pumpkammer (111) in Verbindung steht;
eine Düse (4), die durch ein Flüssigkeitsauslass-Einwegventil (5) mit der Pumpkammer (111) in Verbindung steht; und
ein Rückflusssystem (6), umfassend einen Rückflussströmungskanal (61) und eine Rückflussventilanordnung, wobei ein Flüssigkeitseinlassende des Rückflussströmungskanals (61) durch die Rückflussventilanordnung mit der Pumpkammer (111) in Verbindung steht und ein Flüssigkeitsauslassende des Rückflussströmungskanals (61) mit dem Flüssigkeitsspeichertank in Verbindung steht.

5. Drosselsystem nach Anspruch 4, wobei die Rückflussventilanordnung ein Rückflussventil (62) vor der Spitze und/oder ein Rückflussventil (63) nach der Spitze umfasst, die beide Flüssigkeit zurückführen, wenn der Kolben (12) einen Ausstoßhub durchführt, wobei das Rückflussventil (62) vor der Spitze Flüssigkeit rückführt, die vor der Phase mit hoher Strömung auftritt, und das Rückflussventil (63) nach der Spitze Flüssigkeit rückführt, die nach der Phase mit hoher Strömung auftritt.

6. Drosselsystem nach Anspruch 5, wobei das Rückflussventil (62) vor der Spitze einen ersten Ventilsitz (621) vor der Spitze, einen zweiten Ventilsitz (622) vor der Spitze und einen Ventilkern (623) vor der Spitze umfasst, wobei der erste Ventilsitz (621) vor der Spitze in dem Flüssigkeitspumphohlraum (11) ausgebildet ist, der zweite Ventilsitz (622) vor der Spitze in dem Rückflussströmungskanal (61) ausgebildet ist und sich der Ventilkern (623) vor der Spitze mit hydraulischen Schwankungen in der Pumpkammer (111) einstellt, wobei er schwimmt, um eine flüssigkeitsdichte Verbindung mit dem ersten Ventilsitz (621) vor der Spitze und/oder dem zweiten Ventilsitz (622) vor der Spitze herzustellen.

7. Drosselsystem nach Anspruch 5, wobei das Rückflussventil (63) nach der Spitze einen Ventilsitz (631) nach der Spitze, einen Schieber (632), einen Ventilkern (633) nach der Spitze und ein elastisches Rückstellelement (634) umfasst, wobei der Ventilsitz (631) nach der Spitze in dem Flüssigkeitspumphohlraum (11) ausgebildet ist, sich der Schieber (632) verschiebbar durch den Ventilsitz (631) nach der Spitze erstreckt, der Ventilkern (633) nach der Spitze in dem Rückflussströmungskanal (61) und auf dem Schieber (632) angeordnet ist und das elastische Rückstellelement (634) zwischen einer Innenwand des Rückflussströmungskanals (61) und dem Ventilkern (633) nach der Spitze angeordnet ist, wobei der Ventilsitz (631) nach der Spitze und der Ventilkern (633) nach der Spitze gegeneinander gedrückt werden, um eine flüssigkeitsdichte Verbindung zu bilden.

8. Drosselsystem nach Anspruch 7, wobei sich der Schieber (632) entlang einer Hin- und Herbewegungsrichtung des Kolbens (12) in die Pumpkammer (111) erstreckt und der Schieber (632) konfiguriert ist, um durch den Kolben (12) aus der Pumpkammer (111) ausgestoßen zu werden, um das Rückflussventil (63) nach der Spitze nur dann zu öffnen, wenn der Kolben (12) den Ausstoßhub durchführt und der gegenwärtige Strömungswert des Zahnspülgeräts nicht größer als die Strömungsschwelle ist.

9. Drosselsystem nach Anspruch 4, wobei das Drosselsystem ferner einen Einlass-/Auslassadapter (15) umfasst, der außerhalb des Flüssigkeitspumphohlraums (11) angeordnet ist, wobei das Flüssigkeitseinlass-Einwegventil (3), das Flüssigkeitsauslass-Einwegventil (5) und die Rückflussventilanordnung auf dem Einlass-/Auslassadapter (15) angeordnet sind.

10. Drosselsystem nach Anspruch 9, wobei das Drosselsystem ferner ein Flüssigkeitspumpengehäuse (16) zum Montieren des Einlass- /Auslassadapters (15) umfasst und ein Teil des Rückflussströmungskanals (61) zwischen dem Flüssigkeitspumpengehäuse (16) und dem Einlass-/Auslassadapter (15) ausgebildet ist.

11. Verfahren zum Verwenden eines Drosselsystems nach einem der Ansprüche 5-10, umfassend:
wenn der gegenwärtige Strömungswert des Zahnspülgeräts nicht größer als die Strömungsschwelle ist und bevor die Strömungsspitze auftritt, Öffnen des Rückflussventils (62) vor der Spitze und Schließen des Rückflussventils (63) nach der Spitze, wonach die Flüssigkeit zuerst durch das Rückflussventil (62) vor der Spitze und dann durch den Rückflussströmungskanal (61) zu dem Flüssigkeitsspeichertank zurückströmt;
wenn der gegenwärtige Strömungswert des Zahnspülgeräts größer als die Strömungsschwelle ist, Schließen des Rückflussventils (62) vor der Spitze und des Rückflussventils (63) nach der Spitze;
wenn der gegenwärtige Strömungswert des Zahnspülgeräts nicht größer als die Strömungsschwelle ist und nachdem die Strömungsspitze auftritt, Schließen des Rückflussventils (62) vor der Spitze und Öffnen des Rückflussventils (63) nach der Spitze, wonach die Flüssigkeit zuerst durch das Rückflussventil (63) nach der Spitze und dann durch den Rückflussströmungskanal (61) zu dem Flüssigkeitsspeichertank zurückströmt.

## Revendications

1. Procédé pour étrangler un irrigateur dentaire, comprenant les étapes consistant à :
S1 : obtenir des impulsions de flux montrant un flux de l'irrigateur dentaire qui varie dans le temps d'une manière pulsatile pendant le fonctionnement ;
S2 : définir un seuil de flux, et diviser un cycle d'impulsion unique des impulsions de flux en une phase à flux élevé et une phase à flux faible ; dans lequel une valeur de flux maximum de l'irrigateur dentaire dans le cycle d'impulsion unique se produit dans la phase à flux élevé ;
S3 : déterminer si une valeur de flux actuelle de l'irrigateur dentaire est supérieure au seuil de flux ; si oui, déterminer que l'irrigateur dentaire est dans un mode d'irrigation buccale, et pulvériser du liquide dans un dispositif de pompage de liquide (1) de l'irrigateur dentaire à travers une buse (4) ; et si non, déterminer que l'irrigateur dentaire est dans un mode d'étranglement de reflux, où le liquide dans le dispositif de pompage de liquide (1) avant et/ou après un pic de flux retourne à un réservoir de stockage de liquide de l'irrigateur dentaire.

2. Procédé pour étrangler selon la revendication 1, dans lequel S3 est effectué en :
dénotant une pression de chambre de pompage du dispositif de pompage de liquide (1) lorsque la valeur de flux actuelle est égale au seuil de flux, en tant que valeur de pression de reflux ;
déterminant si une valeur de pression de pompage actuelle du dispositif de pompage de liquide (1) est supérieure à la valeur de pression de reflux, si oui, fermant une structure de soupape de canal de flux entre le dispositif de pompage de liquide (1) et le réservoir de stockage de liquide, et si non, ouvrant la structure de soupape de canal de flux.

3. Procédé pour étrangler selon la revendication 1, dans lequel S3 est effectué en :
dénotant des positions d'une roue excentrique du dispositif de pompage de liquide (1) en tant que P1 et P2 lorsque la valeur de flux actuelle est égale au seuil de flux, dans lequel la roue excentrique tourne de P1 à P2 dans la phase à flux élevé, et tourne de P2 à P1 dans la phase à flux faible ;
déterminant si la roue excentrique est dans la phase à flux élevé, si oui, fermant une structure de soupape de canal de flux entre le dispositif de pompage de liquide (1) et le réservoir de stockage de liquide, et si non, ouvrant la structure de soupape de canal de flux.

4. Système d'étranglement pour mettre en oeuvre un procédé pour étrangler selon l'une quelconque des revendications 1 à 3, comprenant :
un dispositif de pompage de liquide (1) comprenant une cavité de pompage de liquide (11) et un piston (12), dans lequel le piston (12) effectue un mouvement de va-et-vient à l'intérieur d'une chambre de pompage (111) de la cavité de pompage de liquide (11) ;
un canal de flux d'entrée de liquide (2), dans lequel une extrémité d'entrée de liquide du canal de flux d'entrée de liquide (2) est en communication avec le réservoir de stockage de liquide, et une extrémité de sortie de liquide du canal de flux d'entrée de liquide (2) est en communication avec la chambre de pompage (111) à travers une soupape unidirectionnelle d'entrée de liquide (3) ;
une buse (4) en communication avec la chambre de pompage (111) à travers une soupape unidirectionnelle de sortie de liquide (5) ; et
un système de reflux (6) comprenant un canal de flux de reflux (61) et un ensemble de soupape de reflux, dans lequel une extrémité d'entrée de liquide du canal de flux de reflux (61) est en communication avec la chambre de pompage (111) à travers l'ensemble de soupape de reflux, et une extrémité de sortie de liquide du canal de flux de reflux (61) est en communication avec le réservoir de stockage de liquide.

5. Système d'étranglement selon la revendication 4, dans lequel l'ensemble de soupape de reflux comprend une soupape de reflux de pré-pic (62) et/ou une soupape de reflux de post-pic (63), qui toutes deux recyclent le liquide lorsque le piston (12) effectue une course d'échappement, dans lequel la soupape de reflux de pré-pic (62) recycle le liquide qui se produit avant la phase à flux élevé et la soupape de reflux de post-pic (63) recycle le liquide qui se produit après la phase à flux élevé.

6. Système d'étranglement selon la revendication 5, dans lequel la soupape de reflux de pré-pic (62) comprend un premier siège de soupape de pré-pic (621), un second siège de soupape de pré-pic (622), et un noyau de soupape de pré-pic (623), dans lequel le premier siège de soupape de pré-pic (621) est formé dans la cavité de pompage de liquide (11), le second siège de soupape de pré-pic (622) est formé dans le canal de flux de reflux (61), et le noyau de soupape de pré-pic (623) s'ajuste avec des variations hydrauliques dans la chambre de pompage (111), flottant pour établir une connexion étanche au liquide avec le premier siège de soupape de pré-pic (621) et/ou le second siège de soupape de pré-pic (622).

7. Système d'étranglement selon la revendication 5, dans lequel la soupape de reflux de post-pic (63) comprend un siège de soupape de post-pic (631), un coulisseau (632), un noyau de soupape de post-pic (633), et un élément de réinitialisation élastique (634), dans lequel le siège de soupape de post-pic (631) est formé dans la cavité de pompage de liquide (11), le coulisseau (632) s'étend de manière coulissante à travers le siège de soupape de post-pic (631), le noyau de soupape de post-pic (633) est disposé dans le canal de flux de reflux (61) et sur le coulisseau (632), et l'élément de réinitialisation élastique (634) est disposé entre une paroi interne du canal de flux de reflux (61) et le noyau de soupape de post-pic (633), dans lequel le siège de soupape de post-pic (631) et le noyau de soupape de post-pic (633) sont pressés l'un contre l'autre pour former une connexion étanche au liquide.

8. Système d'étranglement selon la revendication 7, dans lequel le coulisseau (632) s'étend dans la chambre de pompage (111) le long d'une direction de mouvement de va-et-vient du piston (12), et le coulisseau (632) est configuré pour être éjecté hors de la chambre de pompage (111) par le piston (12) pour ouvrir la soupape de reflux de post-pic (63) uniquement lorsque le piston (12) effectue la course d'échappement et que la valeur de flux actuelle de l'irrigateur dentaire n'est pas supérieure au seuil de flux.

9. Système d'étranglement selon la revendication 4, dans lequel le système d'étranglement comprend en outre un adaptateur d'entrée/sortie (15) disposé à l'extérieur de la cavité de pompage de liquide (11), dans lequel la soupape unidirectionnelle d'entrée de liquide (3), la soupape unidirectionnelle de sortie de liquide (5), et l'ensemble de soupape de reflux sont disposés sur l'adaptateur d'entrée/sortie (15).

10. Système d'étranglement selon la revendication 9, dans lequel le système d'étranglement comprend en outre un boîtier de pompage de liquide (16) pour monter l'adaptateur d'entrée/sortie (15), et une partie du canal de flux de reflux (61) est formée entre le boîtier de pompage de liquide (16) et l'adaptateur d'entrée/sortie (15).

11. Procédé pour utiliser un système d'étranglement selon l'une quelconque des revendications 5 à 10, comprenant les étapes consistant à :
lorsque la valeur de flux actuelle de l'irrigateur dentaire n'est pas supérieure au seuil de flux et avant que le pic de flux ne se produise, ouvrir la soupape de reflux de pré-pic (62) et fermer la soupape de reflux de post-pic (63), après quoi le liquide retourne au réservoir de stockage de liquide à travers d'abord la soupape de reflux de pré-pic (62) puis le canal de flux de reflux (61) ;
lorsque la valeur de flux actuelle de l'irrigateur dentaire est supérieure au seuil de flux, fermer la soupape de reflux de pré-pic (62) et la soupape de reflux de post-pic (63) ;
lorsque la valeur de flux actuelle de l'irrigateur dentaire n'est pas supérieure au seuil de flux et après que le pic de flux se produit, fermer la soupape de reflux de pré-pic (62) et ouvrir la soupape de reflux de post-pic (63), après quoi le liquide retourne au réservoir de stockage de liquide à travers d'abord la soupape de reflux de post-pic (63) puis le canal de flux de reflux (61).
